# FASCICULE DE BREVET EUROPEEN

(11) **EP 4 077 033 B1**
(45) Date de publication et mention de la délivrance du brevet: **22.11.2023**
(21) Numéro de dépôt: 20811670.7
(22) Date de dépôt: 30.11.2020
(51) Int. Cl.: B60L 53/16, B25J 11/00, B25J 1/00, B60L 53/35, B25J 15/04

(54) **PROCÉDÉ DE CONNEXION ENTRE UNE PRISE ELECTRIQUE DE VEHICULE ET UN CONNECTEUR COMPRENANT UNE SURFACE D'AIMANTATION**
VERFAHREN ZUM VERBINDEN EINES ELEKTRISCHEN AUSGANGS EINES FAHRZEUGS MIT EINEM STECKVERBINDER AUFWEISEND EINE MAGNETISIERUNGSOBERFLÄCHE
METHOD FOR CONNECTING AN ELECTRICAL OUTLET OF A VEHICLE TO A CONNECTOR COMPRISING A MAGNETIZING SURFACE

(30) Priorité: 20.12.2019 FR 1915333
(43) Date de publication de la demande: 26.10.2022
(73) Titulaire: Renault s.a.s, 92100 Boulogne Billancourt (FR)
(72) Inventeur: ROLLET, Remi, 91190 GIF SUR YVETTE (FR)
(86) Numéro de dépôt international: PCT/EP2020/083824
(87) Numéro de publication internationale: WO 2021/121914

(56) Documents cités:
- WO-A1-2017/216458
- WO-A1-2017/216458
- CN-A- 107 878 229
- CN-A- 107 878 229
- CN-A- 109 878 355
- CN-A- 109 878 355
- CN-A- 110 654 258
- CN-A- 110 654 258
- US-B2- 9 561 729
- US-B2- 9 561 729

## Description

La présente invention concerne une prise électrique de véhicule rechargeable électriquement, un connecteur d'alimentation électrique et un procédé de connexion entre ladite prise électrique et ledit connecteur.

Les véhicules thermiques sont peu à peu remplacés par des véhicules électriques ou véhicules hydrides qui sont plus respectueux de l'environnement. Afin d'améliorer l'efficacité de recharge des batteries des véhicules électriques ou hybrides, des systèmes de recharge automatisés, pouvant fonctionner avec ou sans contact avec le véhicule à recharger, ont été développés.

Dans le cas de la recharge automatisée d'un véhicule avec contact, un robot positionné à côté du véhicule comprend un bras mobile muni à son extrémité d'un connecteur d'alimentation électrique. Lorsque le véhicule doit être rechargé, le robot place le connecteur d'alimentation au niveau de la prise électrique de ce véhicule au moyen du bras mobile puis le bras mobile exerce un effort de façon à insérer ou brancher le connecteur électrique dans la prise électrique. Avec un tel système, l'effort est appliqué selon l'axe longitudinal du bras mobile, c'est à dire passant sensiblement par les extrémités dudit bras.

Cependant, dans le cas où l'on veut adapter ce mode de recharge automatisée à la recharge de plusieurs véhicules placés les uns à côté des autres, il est préférable d'utiliser un portique placé au-dessus des véhicules. Dans un tel système, le bras mobile d'une longueur de 1,5 à 2 mètres et comportant un connecteur d'alimentation électrique à son extrémité est placé dans une position sensiblement verticale. Afin de brancher le connecteur d'alimentation à la prise électrique du véhicule, le bras doit alors exercer un effort dans une direction perpendiculaire à son axe longitudinal.

Cependant, il est difficile d'engager le connecteur d'alimentation dans la prise électrique du véhicule avec suffisamment de force et de précision pour obtenir une connexion optimale, en particulier compte tenu de la longueur du bras. Dans le cas où le connecteur n'est pas engagé complètement et précisément dans la prise électrique du véhicule, la batterie du véhicule pourrait ne pas être chargée. Par ailleurs, si la connexion n'est pas réalisée dans l'axe de connexion, la prise électrique et/ou le connecteur d'alimentation pourraient être endommagés. CN 107 878 229 A divulgue un procédé de connexion d'un connecteur d'alimentation électrique à une prise électrique de véhicule comprenant une batterie rechargeable électriquement, ledit connecteur d'alimentation comprenant un corps et au moins une première surface d'aimantation.

La présente invention a donc pour but de développer un procédé de connexion entre un connecteur d'alimentation électrique et une prise électrique permettant de s'affranchir d'au moins un des inconvénients précités.

La présente invention a pour premier objet un procédé de connexion d'un connecteur d'alimentation électrique à une prise électrique d'un véhicule comprenant une batterie rechargeable électriquement, ledit connecteur d'alimentation comprenant un corps et au moins une première surface d'aimantation mobile par rapport audit corps, le procédé comprenant au moins les étapes de :
- mettre en contact aimanté ladite au moins une première surface d'aimantation mobile du connecteur avec au moins une première surface d'aimantation complémentaire de la prise électrique, au moyen du déplacement de ladite au moins une surface d'aimantation mobile par rapport audit corps,
- engager le connecteur dans la prise électrique par déplacement du corps par rapport à la première surface mobile de manière à effectuer un contact électrique entre le connecteur et la prise électrique.

Ce procédé permet une connexion entre le connecteur d'alimentation et la prise électrique du véhicule sans fournir un effort particulier. La connexion entre le connecteur et la prise peut donc se faire aisément et de façon précise et ce, sans qu'un utilisateur, un bras mobile, ou tout autre dispositif de maintien du connecteur n'ait à fournir un effort particulier.

En effet, selon ce procédé le connecteur est approché de la prise électrique du véhicule par le dispositif de maintien et c'est ensuite le connecteur qui se positionne au contact de la prise électrique par le déplacement de ladite surface d'aimantation mobile vers la première surface d'aimantation complémentaire. Le connecteur est alors pré-engagé dans la prise et le contact entre le connecteur et la prise est maintenu jusqu'à ce qu'un effort supérieur à la force d'aimantation dissocie les deux surfaces. Une fois ce pré-engagement effectué, le dispositif de maintien n'a pas besoin de fournir d'effort et permet essentiellement de maintenir le connecteur en position de pré-engagement.

Le connecteur est ensuite engagé dans la prise électrique par déplacement du corps par rapport à la première surface d'aimantation mobile, le contact aimanté entre la première surface d'aimantation mobile et la première surface d'aimantation complémentaire étant maintenu pendant la phase d'engagement. Une fois l'engagement du connecteur dans la prise réalisé, la batterie du véhicule peut être rechargée.

Selon un mode de réalisation préféré, le connecteur d'alimentation électrique peut comprendre une fiche ou « prise mâle » comportant plusieurs broches et la prise électrique peut être une « prise femelle » et peut comprendre un ensemble de perforations dans lesquelles peuvent s'insérer les broches dans la phase d'engagement. Selon un autre mode de réalisation possible, le connecteur d'alimentation électrique peut comprendre une « prise femelle » et la prise électrique être une « prise mâle ».

Selon un mode de réalisation préféré, le déplacement de la surface d'aimantation mobile par rapport au corps se fait au moyen d'un premier système d'entrainement de cette surface. La première surface d'aimantation mobile peut par exemple être placée à l'extrémité d'un premier élément mobile, par exemple une tige mobile, et le premier système d'entrainement peut permettre le déplacement de ce premier élément mobile par rapport au corps du connecteur. Selon un mode de réalisation possible, le premier système d'entrainement peut être un moteur. Selon un autre mode de réalisation possible, le premier élément mobile peut comprendre une crémaillère et le premier système d'entrainement peut être un pignon mobile en rotation par rapport au corps et entrainant la crémaillère.

Selon un autre mode de réalisation préféré, le déplacement du corps par rapport à la première surface d'aimantation mobile de manière à effectuer le contact électrique entre le connecteur et la prise électrique peut être réalisé au un moyen du premier système d'entrainement ou d'un système d'entrainement secondaire, de préférence au moyen du premier système d'entrainement.

Selon un mode de réalisation particulièrement préféré, le contact entre le connecteur d'alimentation électrique et la prise électrique peut se faire au moyen du déplacement de la première surface d'aimantation mobile et d'une deuxième surface d'aimantation mobile par rapport au corps du connecteur. De cette façon, les première et deuxième surfaces d'aimantation mobiles se mettent en contact respectivement avec la première surface d'aimantation complémentaire et une deuxième surface d'aimantation complémentaire de la prise électrique. Le contact aimanté entre le connecteur et la prise est ainsi optimisé et permet au connecteur d'être correctement aligné avec la prise lors du pré-engagement ce qui facilite la phase suivante d'engagement du connecteur.

Selon ce mode de réalisation, le connecteur peut être un corps cylindrique et la deuxième surface d'aimantation mobile peut être placée de façon diamétralement opposée à la première surface d'aimantation mobile par rapport à ce corps cylindrique. Selon ce mode de réalisation, ce qui a été décrit pour la première surface d'aimantation s'applique pour la deuxième surface d'aimantation mobile, notamment, le déplacement de la surface mobile et le système d'entrainement permettant ce déplacement.

Selon un mode de réalisation possible, le procédé de connexion peut comprendre en outre une phase de déconnexion entre le connecteur d'alimentation et la prise électrique une fois la batterie rechargée, ladite phase de déconnexion comprenant les étapes suivantes :
- éloigner la première surface d'aimantation mobile de la première surface d'aimantation complémentaire de façon à supprimer l'attraction aimantée entre ces deux surfaces, et
- exercer une pression sur une première surface d'appui de la prise électrique au moyen d'une première surface poussoir du connecteur de manière à séparer le connecteur et la prise électrique.

Avantageusement, la déconnexion entre le connecteur d'alimentation et la prise électrique est réalisée au moyen du connecteur et il n'est pas nécessaire d'appliquer un effort extérieur sur le connecteur. En particulier, l'utilisateur, le bras mobile, ou tout autre dispositif de maintien du connecteur n'a pas à exercer d'effort pour déconnecter ou désengager le connecteur de la prise électrique.

Selon un mode de réalisation possible, l'éloignement de la première surface d'aimantation mobile par rapport à la première surface d'aimantation complémentaire est réalisé par le déplacement de la première surface d'aimantation mobile par rapport au corps du connecteur d'alimentation. Ce déplacement peut se faire au moyen d'un système d'entrainement, de préférence au moyen du premier système d'entrainement.

Dans le cas où la première surface d'aimantation mobile est placée à l'extrémité d'un premier élément mobile, par exemple une tige mobile, comme précédemment décrit, le déplacement de la première surface d'aimantation mobile par rapport au corps peut se faire par déplacement de la première tige mobile par rapport au corps, et ce, au moyen du premier système d'entrainem ent.

Selon le mode de réalisation particulier précédemment décrit, le contact entre le connecteur d'alimentation électrique et la prise électrique peut se faire au moyen du déplacement d'une première et d'une deuxième surfaces d'aimantation mobiles par rapport au corps du connecteur pour se mettre en contact avec une première et une deuxième surfaces d'aimantation complémentaires de la prise électrique. Selon ce mode de réalisation, l'étape d'éloignement de la phase de déconnexion comprend l'éloignement des première et deuxième surfaces d'aimantation mobile par rapport aux premières et deuxièmes surfaces d'aimantations complémentaires respectivement, et ce, de préférence simultanément, de façon à supprimer l'attraction entre ces deux surfaces.

Selon un mode de réalisation possible, la première surface poussoir peut être placée à l'extrémité d'un premier élément poussoir mobile, par exemple une première tige poussoir. La séparation entre le connecteur et la prise électrique peut alors se faire par déplacement du premier élément poussoir par rapport au corps du connecteur, la première surface poussoir venant exercer une pression sur la première surface d'appui de façon à désengager le connecteur de la prise. Le déplacement du premier élément poussoir par rapport au corps peut être réalisé au moyen d'un premier système de répulsion.

Selon un mode de réalisation possible, le premier système de répulsion peut par exemple être un moteur permettant de déplacer le premier élément poussoir par rapport au corps du connecteur. Selon un autre exemple de réalisation possible, le premier élément poussoir peut être une tige comportant une crémaillère et le premier système de répulsion peut être un pignon mobile en rotation par rapport au corps et entrainant la crémaillère. Selon encore un autre mode de réalisation possible, le premier système de répulsion peut être un ressort pouvant être compressé durant la phase d'engagement et pouvant se décompresser spontanément une fois les surfaces d'aimantation séparées afin de séparer le connecteur de la prise électrique.

Selon un mode de réalisation préféré, le connecteur peut comprendre un deuxième élément poussoir. La déconnexion est ainsi optimisée et le connecteur peut être désengagé de la prise tout en étant maintenu dans l'axe de connexion de façon à ne pas endommager le connecteur et/ou la prise électrique. Selon ce mode de réalisation, le connecteur peut être un corps cylindrique et le deuxième élément poussoir peut être placé de façon diamétralement opposé au premier élément poussoir par rapport à ce corps cylindrique. Ce qui a été décrit pour le premier élément poussoir s'applique également au deuxième élément poussoir.

La présente invention a pour deuxième objet un système comprenant le connecteur d'alimentation électrique, et un véhicule comprenant une batterie rechargeable électriquement et possédant une prise électrique permettant de recharger ladite batterie lorsqu'elle est connectée au connecteur d'alimentation électrique écrit dans paragraphe 33 ci-dessous et selon le procédé précédemment décrit, ladite prise électrique comprenant au moins une première surface d'aimantation complémentaire configurée pour interagir avec une surface d'aimantation mobile du connecteur électrique et au moins une première surface d'appui configurée pour interagir avec une première surface poussoir du connecteur électrique.

La prise électrique du véhicule permet une connexion facilitée avec un connecteur d'alimentation électrique. En particulier, l'interaction entre la première surface d'aimantation complémentaire de la prise et la première surface d'aimantation mobile du connecteur permet un pré-engagement du connecteur dans la prise électrique. Ainsi, un utilisateur, un bras mobile ou tout autre dispositif de maintien du connecteur n'a qu'à approcher le connecteur de la prise et n'a pas besoin de fournir un effort pour effectuer ce pré-engagement.

Par ailleurs, le pré-engagement assure un positionnement correct du connecteur par rapport à la prise et permet donc d'effectuer ensuite une connexion optimale entre le connecteur et la prise, notamment une connexion selon l'axe de connexion. Le pré-engagement puis l'engagement du connecteur d'alimentation électrique dans la prise peuvent être réalisés selon le procédé décrit précédemment.

Lorsque la batterie du véhicule est rechargée, la présence de la première surface d'appui de la prise électrique permet à la première surface poussoir du connecteur d'exercer une pression sur cette surface de manière à séparer le connecteur de la prise électrique (phase de déconnexion). Ainsi, l'utilisateur, le bras mobile ou tout autre dispositif de maintien du connecteur n'a pas à fournir d'effort pour séparer le connecteur de la prise électrique une fois la batterie du véhicule rechargée. La déconnexion peut être réalisée selon le procédé précédemment décrit.

Selon un mode de réalisation préféré, la prise électrique peut être une « prise femelle » et peut comprendre un ensemble de perforations pouvant se connecter avec un connecteur comprenant une « prise mâle ». Selon un autre mode de réalisation possible, la prise électrique peut être une « prise mâle » comportant un ensemble de broches, et peut se connecter à un connecteur d'alimentation électrique comprenant une « prise femelle ».

Selon un mode de réalisation possible, la première surface d'aimantation mobile et la première surface d'aimantation complémentaire peuvent chacune comprendre un aimant permanent, les deux aimants permanent s'attirant mutuellement. Selon un autre mode de réalisation possible, l'une de la première surface d'aimantation mobile ou de la première surface d'aimantation complémentaire peut comprendre un aimant permanent et l'autre surface d'aimantation peut être en métal attirant cet aimant permanent, de préférence en fer doux.

Selon des modes particuliers de réalisation pris seuls ou en combinaison :
- la première surface d'aimantation complémentaire et la première surface d'appui peuvent être disposées sur un bord annulaire externe de la prise électrique ; ainsi, la première surface d'aimantation complémentaire et la première surface d'appui ne font pas partie de la partie fonctionnelle de la prise électrique, la partie fonctionnelle pouvant être une fiche comprenant des broches (ou « prise mâle) ou un ensemble de perforations (ou « prise femelle) ; la partie fonctionnelle de la prise électrique n'a donc pas besoin d'être modifiée ou adaptée à la présence de la première surface d'aimantation complémentaire et de la première surface d'appui ; et
- la prise électrique peut comprendre une deuxième surface d'aimantation complémentaire, de préférence positionnée sur le bord annulaire externe de la prise de manière diamétralement opposée à la première surface d'aimantation complémentaire, et une deuxième surface d'appui, de préférence positionnée sur le bord annulaire externe de la prise de manière diamétralement opposée à la première surface d'appui ; la deuxième surface d'aimantation complémentaire permet un pré-engagement optimisé du connecteur dans la prise puisque le contact entre le connecteur et la prise se fait, de préférence simultanément, avec deux surfaces d'aimantation ; la deuxième surface d'aimantation complémentaire permet notamment un contact d'une plus grande force et permet également un pré-engagement dans l'axe de connexion de manière à réaliser ensuite un engagement optimisé ; selon ce mode de réalisation, la prise électrique peut avoir une forme générale circulaire et la première et la deuxième surfaces d'aimantation complémentaires peuvent être alignées selon une première ligne passant par le centre de la prise ; toujours selon ce mode de réalisation, la première et la deuxième surfaces d'appui peuvent être alignées sur une deuxième ligne passant par le centre de la prise ; selon un mode de réalisation préféré, la première et la deuxième lignes peuvent être perpendiculaires l'une à l'autre ; selon un autre mode de réalisation possible, la prise électrique peut comprendre plus de deux surfaces d'aimantation complémentaires et/ou plus de deux surfaces d'appui.

Selon un mode de réalisation possible, la première surface d'aimantation complémentaire de la prise peut avoir une surface similaire à la première surface d'aimantation mobile du connecteur à laquelle elle est destinée à être connectée. La première surface d'aimantation complémentaire peut notamment avoir la même forme que la première surface d'aimantation mobile, par exemple carrée, ovale... Par ailleurs, la première surface d'aimantation complémentaire peut avoir une taille équivalente à la première surface d'aimantation mobile, ce qui signifie que la différence entre les deux surfaces peut être d'au plus 40% de la surface de la plus petite des deux surfaces d'aimantation, de préférence d'au plus 25%.

Selon un mode de réalisation possible, la première surface d'appui de la prise peut avoir une surface équivalente à la première surface poussoir du connecteur avec lequel la prise est destinée à se connecter. La première surface d'appui peut notamment avoir la même forme que la première surface poussoir, par exemple carrée, ovale... Par ailleurs, la première surface d'appui peut avoir une taille équivalente à la première surface poussoir, ce qui signifie que la différence entre les deux surfaces peut être d'au plus 40% de la surface de la plus petite des deux surfaces, de préférence d'au plus 25%.

La présente invention a pour troisième objet un connecteur d'alimentation électrique destiné à être connecté à une prise électrique de véhicule tel que celui précédemment décrit, ledit connecteur d'alimentation comprenant :
- au moins un corps,
- au moins une première surface d'aimantation mobile par rapport audit corps destinée à réaliser un contact aimanté avec une première surface d'aimantation complémentaire de la prise électrique, et
- au moins une première surface poussoir mobile par rapport audit corps destinée à s'appuyer sur une première surface d'appui de la prise électrique.

Le connecteur d'alimentation électrique permet une connexion et une déconnexion optimisées avec une prise électrique d'un véhicule automobile, par exemple comme celui précédemment décrit. Ainsi, la connexion entre le connecteur et la prise peut se faire aisément et de façon précise et ce, sans qu'un utilisateur, un bras mobile, ou tout autre dispositif de maintien du connecteur n'ait à fournir un effort particulier. Le connecteur est approché de la prise électrique par l'utilisateur, le bras mobile, ou tout autre dispositif de maintien qui tient par exemple le corps du connecteur. La première surface d'aimantation mobile, au moyen de son déplacement par rapport au corps, réalise alors un contact aimanté avec la première surface d'aimantation complémentaire de la prise électrique et ce, sans que l'utilisateur, le bras mobile, ou tout autre dispositif de maintien n'ait à fournir un effort particulier.

Lorsque le connecteur a été engagé dans la prise électrique et que la batterie du véhicule a été chargée, le connecteur permet la déconnexion par rapport à la prise électrique sans qu'un effort extérieur n'ait à être fourni. En effet, la première surface poussoir mobile, au moyen d'un mouvement par rapport au corps, exerce une pression sur une première surface d'appui de la prise électrique et permet de séparer le connecteur de la prise électrique. Ainsi, pour la connexion comme pour la déconnexion, c'est le connecteur qui fournit l'effort, et l'utilisateur, le bras mobile ou tout autre dispositif de maintien n'a à fournir qu'un effort minime de façon à maintenir le connecteur en position à proximité de la prise ou contre la prise.

Selon un mode de réalisation préféré, la première surface d'aimantation mobile et la première surface poussoir sont placées à l'extérieur du corps et sont fixées de façon mobile audit corps.

Selon un autre mode de réalisation préféré, le corps peut être de préférence de forme cylindrique, son axe longitudinal étant de préférence aligné avec l'axe de connexion et de déconnexion.

Selon un mode de réalisation possible, la première surface d'aimantation mobile et la première surface d'aimantation complémentaire peuvent chacune comprendre un aimant permanent, les deux aimants permanents s'attirant mutuellement. Selon un autre mode de réalisation possible, l'une de la première surface d'aimantation mobile ou de la première surface d'aimantation complémentaire peut comprendre un aimant permanent et l'autre surface d'aimantation peut être en métal attirant cet aimant, de préférence en fer doux.

Selon un mode de réalisation possible, la première surface d'aimantation mobile peut avoir une surface équivalente à la première surface d'aimantation complémentaire de la prise à laquelle elle est destinée à se connecter. La première surface d'aimantation mobile peut notamment avoir la même forme que la première surface d'aimantation complémentaire, par exemple carrée, ovale... Par ailleurs, la première surface d'aimantation mobile peut avoir une taille équivalente à la première surface d'aimantation complémentaire, ce qui signifie que la différence entre les deux surfaces peut être d'au plus 40% de la surface de la plus petite des deux surfaces d'aimantation, de préférence d'au plus 25%.

Selon un mode de réalisation possible, la première surface poussoir peut avoir une surface équivalente à la première surface d'appui sur laquelle elle est destinée à s'appuyer. La première surface poussoir peut notamment avoir la même forme que la première surface d'appui, par exemple carrée, ovale... Par ailleurs, la première surface poussoir peut avoir une taille équivalente à la première surface d'appui, ce qui signifie que la différence entre les deux surfaces peut être d'au plus 40% de la surface de la plus petite des deux surfaces, de préférence d'au plus 25%.

Selon des modes particuliers de réalisation pris seuls ou en combinaison :
- la première surface d'aimantation mobile peut être placée à l'extrémité d'un premier élément mobile, par exemple d'une première tige mobile ; le premier élément mobile peut permettre un déplacement facilité de la première surface d'aimantation mobile pour qu'elle soit mise en contact avec la première surface d'aimantation complémentaire de la prise ; la tige mobile peut avoir tout type de forme et avoir une longueur adaptée au connecteur et à la prise, par exemple entre 15 cm et 20 cm ;
- le premier élément mobile peut être mis en mouvement au moyen d'un premier système d'entrainement ; le premier système d'entrainement peut permettre de déplacer la tige mobile vers la première surface d'aimantation complémentaire pour effectuer l'étape de pré-engagement du connecteur dans la prise ; le premier système d'entrainement peut permettre également d'éloigner la première surface d'aimantation mobile de la première surface d'aimantation complémentaire lors de la phase de déconnexion ; selon un mode de réalisation préféré, le premier système d'entrainement peut également permettre d'engager le connecteur dans la prise lorsque les deux surfaces aimantées sont en contact et ce, par le déplacement du corps par rapport à la première surface d'aimantation mobile ; le premier système d'entrainement évite ainsi à l'utilisateur, le bras mobile ou tout autre type de dispositif de maintien du connecteur d'avoir à fournir un effort pour pré-engager, engager et/ou déconnecter le connecteur ; selon un mode de réalisation possible, le premier système d'entrainement peut être un moteur ; selon un autre mode de réalisation possible, la première tige mobile peut comprendre une crémaillère et le premier système d'entrainement peut être un pignon mobile en rotation par rapport au corps et entrainant la crémaillère ;
- le connecteur peut comprendre une deuxième surface d'aimantation mobile ; la deuxième surface d'aimantation mobile peut permettre un pré-engagement du connecteur dans la prise optimisé puisque le contact entre le connecteur et la prise se fait avec deux surfaces d'aimantation, de préférence simultanément ; la deuxième surface d'aimantation mobile permet notamment un contact d'une plus grande force et permet également un pré-engagement dans de connexion avec l'axe de la prise électrique de manière à réaliser ensuite un engagement optimisé ; selon un mode de réalisation préféré, le corps peut être de forme cylindrique et la première et la deuxième surfaces d'aimantation mobiles peuvent être placées de façon diamétralement opposée autour du corps ; selon un autre mode de réalisation préféré, la deuxième surface d'aimantation mobile peut être placée à l'extrémité d'une deuxième tige mobile, de préférence identique à la première tige mobile ; d'une manière générale, ce qui a été décrit pour la première surface d'aimantation mobile s'applique à la deuxième surface d'aimantation mobile ;
- la première surface poussoir peut être placée à l'extrémité d'un premier élément poussoir mobile, par exemple une tige poussoir ; la séparation entre le connecteur et la prise électrique se fait par déplacement du premier élément poussoir par rapport au corps du connecteur, le premier élément poussoir venant ensuite appuyer sur la première surface d'appui de façon à désengager le connecteur de la prise ;
- le déplacement du premier élément poussoir par rapport au corps peut être réalisé au moyen d'un premier système de répulsion ; selon un premier exemple de réalisation, le premier système de répulsion peut être un moteur permettant de déplacer le premier élément poussoir par rapport au corps du connecteur ; selon un deuxième exemple de réalisation possible, le premier élément poussoir peut être une tige comportant une crémaillère et le premier système de répulsion peut être un pignon mobile en rotation par rapport au corps et entrainant la crémaillère ; selon un troisième exemple de réalisation possible, le premier système de répulsion peut être un ressort pouvant être compressé durant la phase d'engagement et pouvant se décompresser spontanément une fois les surfaces d'aimantation séparées afin de séparer le connecteur de la prise électrique ; et
- le connecteur peut comprendre une deuxième surface poussoir ; la déconnexion est ainsi optimisée et le connecteur peut être désengagé de la prise tout en étant maintenu dans l'axe de connexion de façon à ne pas endommager le connecteur et/ou la prise électrique ; selon ce mode de réalisation, le connecteur peut être un corps cylindrique et le deuxième élément poussoir peut être placé de façon diamétralement opposé au premier élément poussoir par rapport au corps cylindrique ; d'une manière générale, ce qui a été décrit pour le premier élément poussoir s'applique également au deuxième élément poussoir.

Le véhicule selon le deuxième objet de l'invention est rechargé au moyen du connecteur selon le troisième objet de l'invention en utilisant le procédé selon le premier objet de l'invention.

La présente invention a pour quatrième objet une installation pour la recharge de batteries électriques d'au moins deux véhicules selon le deuxième objet de l'invention, l'installation comprenant un bras mobile se terminant par un connecteur d'alimentation selon le troisième objet de l'invention, ledit bras mobile étant configuré pour se déplacer de manière à connecter le connecteur successivement avec la prise électrique desdits véhicules pour recharger les batteries desdits véhicules, la connexion se faisant au moyen du procédé selon le premier objet.

### Brève description des dessins

Les dessins annexés illustrent l'invention :
[Fig. 1] La figure 1 est une vue schématique de face d'une prise électrique de véhicule selon un mode de réalisation de l'invention.
[Fig. 2a] La figure 2a est une vue schématique en perspective d'un connecteur d'alimentation électrique selon un mode de réalisation de l'invention.
[Fig. 2b] La figure 2b est une vue schématique en perspective du connecteur d'alimentation électrique de la figure 2a lorsqu'il est connecté à la prise électrique de la figure 1.
[Fig. 3a] La figure 3a représente de façon schématique un procédé de connexion selon un premier mode de réalisation.
[Fig. 3b] La figure 3b représente de façon schématique un procédé de connexion selon un deuxième mode de réalisation.
[Fig. 3c] La figure 3c représente de façon schématique un procédé de connexion selon un troisième mode de réalisation.
[Fig. 4] La figure 4 représente de façon schématique une installation de recharge automatique de véhicules.

### Description de mode(s) de réalisation

Pour des raisons de clarté, les mêmes éléments ont été désignés par des références identiques. De même, seuls les éléments essentiels pour la compréhension de l'invention ont été représentés de manière schématique, et ceci sans respect de l'échelle.

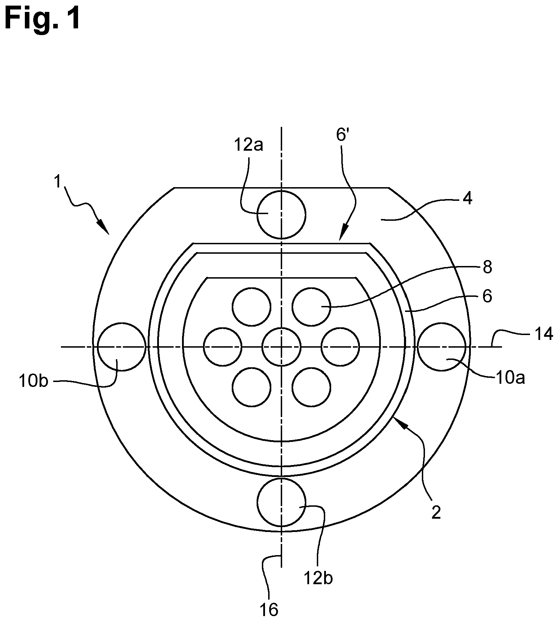

Comme représenté sur la figure 1, une prise électrique 1 selon un mode de réalisation comprend une partie fonctionnelle 2 entourée par un bord annulaire externe 4. Le bord annulaire externe 4 est plan et la partie fonctionnelle 2 est en relief par rapport au plan du bord annulaire externe 4.

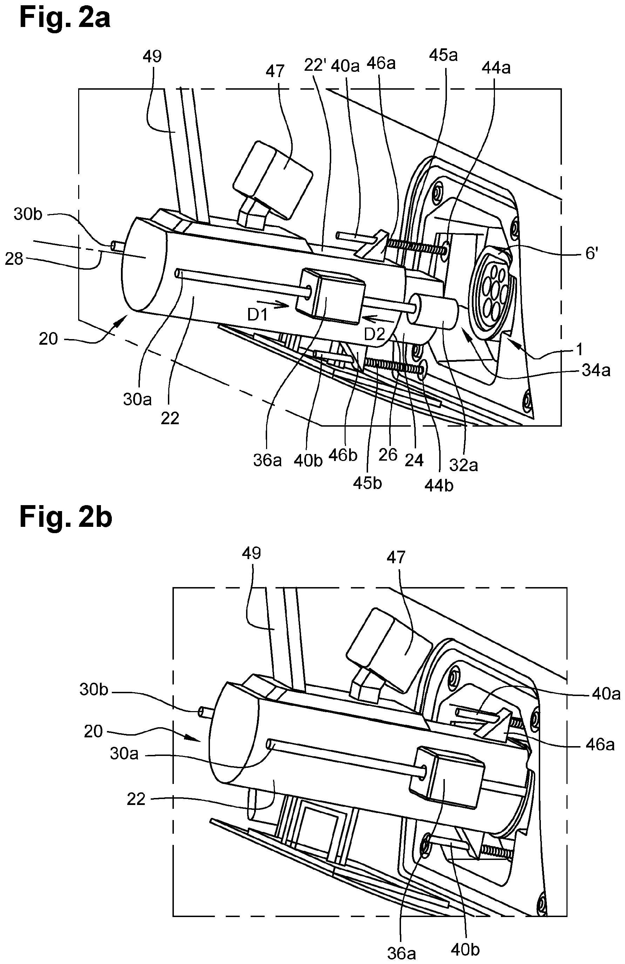

La partie fonctionnelle 2 de la prise 1 est la partie qui va permettre le passage du courant électrique servant à recharger la batterie d'un véhicule dans lequel la prise 1 est installée et ce, lorsque la prise 1 est connectée à un connecteur d'alimentation électrique, comme par exemple celui qui sera décrit en référence aux figures 2a et 2b.

Dans ce mode de réalisation, la partie fonctionnelle 2 comprend un pourtour 6 et un ensemble de sept perforations 8 placées à l'intérieur de ce pourtour 6. La partie fonctionnelle 2 est donc une prise électrique « femelle » destinée à être connectée à un connecteur « mâle ». Selon un autre mode de réalisation possible, la partie fonctionnelle peut être une prise « mâle » comprenant des broches et pouvant être connectée à un connecteur « femelle ». La partie fonctionnelle 2 est sensiblement ronde et comporte un méplat 6' sur sa partie haute.

Le bord annulaire externe 4 comprend une première surface d'aimantation complémentaire 10a et une deuxième surface d'aimantation complémentaire 10b. Ces deux surfaces d'aimantation complémentaires 10a et 10b sont destinées à être mises en contact aimanté avec des surfaces d'aimantation mobiles d'un connecteur comme celui qui sera décrit en référence aux figures 2a et 2b. Avantageusement, la première et la deuxième surfaces d'aimantation complémentaires 10a et 10b ne sont pas placées sur la partie fonctionnelle 2 de la prise 1, et leur présence n'affecte pas le passage du courant électrique et ne nécessite pas d'adaptation de la partie fonctionnelle 2 de la prise 1.

La première et la deuxième surfaces d'aimantation complémentaires 10a et 10b sont positionnées de manière diamétralement opposée l'une par rapport à l'autre. En particulier, la prise 1 est de forme sensiblement ronde et les première et deuxième surfaces d'aimantation complémentaires 10a et 10b sont alignées sur une première ligne 14 passant préférentiellement par le centre de la prise 1. Ce positionnement de la première et de la deuxième surfaces d'aimantation complémentaires 10a et 10b permet à un connecteur 20 (illustré sur les figures 2a et 2b) possédant deux surfaces d'aimantation mobiles d'effectuer un contact stable avec la prise 1 et notamment un contact selon un axe permettant ensuite une connexion optimisée.

Selon ce mode de réalisation, les première et deuxième surfaces d'aimantation complémentaires 10a et 10b sont en fer doux et peuvent réaliser un contact aimanté avec des surfaces d'aimantation mobiles comprenant un aimant permanent. Selon d'autres modes de réalisation possibles, la première et la deuxième surfaces d'aimantation complémentaires 10a et 10b peuvent comprendre un aimant permanent et peuvent alors se connecter soit à des surfaces d'aimantation mobiles comprenant un aimant permanent attirant celui des surfaces complémentaires, soit à des surfaces d'aimantation mobiles en métal attirant l'aimant, par exemple en fer doux.

La première et la deuxième surfaces d'aimantation complémentaires 10a et 10b sont de forme circulaire mais peuvent avoir tout autre forme comme par exemple carrée, ovale ... Cette forme est similaire à la forme des surfaces d'aimantation mobiles avec lesquelles la première et la deuxième surfaces d'aimantation complémentaires 10a et 10b vont être mises en contact. Par ailleurs, la première et la deuxième surfaces d'aimantation complémentaires 10a et 10b peuvent avoir une dimension équivalente aux surfaces d'aimantation mobiles du connecteur de façon à obtenir un contact stable.

Le bord annulaire externe 4 comprend également une première surface d'appui 12a et une deuxième surface d'appui 12b. Ces deux surfaces d'appui sont destinées à servir d'appui à des surfaces poussoir du connecteur 20 comme ce sera décrit en référence aux figures 2a et 2b. Avantageusement, la première et la deuxième surfaces d'appui 12a et 12b ne sont pas placées sur la partie fonctionnelle 2 de la prise 1, et leur présence n'affecte pas le passage du courant électrique et ne nécessite pas d'adaptation de la partie fonctionnelle 2 de la prise 1.

La première et la deuxième surfaces d'appui 12a et 12b sont positionnées de manière diamétralement opposée l'une par rapport à l'autre. En particulier, la première et la deuxième surfaces d'appui 12a et 12b sont alignées sur une deuxième ligne 16 passant de préférence par le centre de la prise 1. Ce positionnement de la première et de la deuxième surfaces d'appui 12a et 12b permet à un connecteur possédant deux surfaces poussoir de se déconnecter de la prise dans l'axe de connexion et donc de ne pas endommager la prise 1 et/ou le connecteur. Selon un mode de réalisation préféré, la première et la deuxième lignes sont perpendiculaires mais selon d'autres modes de réalisation possibles, elles peuvent se croiser en formant un angle compris entre 10 et 90 °.

La première et la deuxième surfaces d'appui 12a et 12b sont de forme circulaire mais peuvent avoir tout autre forme comme par exemple carrée, ovale ... Cette forme est similaire à la forme des surfaces poussoir avec lesquelles la première et la deuxième surfaces d'appui 12a et 12b vont interagir. Par ailleurs, la première et la deuxième surfaces d'appui 12a et 12b peuvent avoir une dimension équivalente aux surfaces poussoir du connecteur de façon à ce que les surfaces poussoir puisse effectuer un appui stable.

La prise électrique 1 peut être placée sur tout type de véhicule, en particulier sur des véhicules automobiles. Elles permettent de pouvoir être connectées à des connecteurs comme celui qui va être décrit en référence aux figures 2a et 2b. Cependant, comme la première et la deuxième surfaces complémentaires 10a et 10b, ainsi que la première et la deuxième surfaces d'appui 12a et 12b ne sont pas placées sur la partie fonctionnelle 2 de la prise 1 et qu'il n'est pas nécessaire de modifier cette partie fonctionnelle 2, cette prise peut également être connectée à d'autres connecteurs conventionnels.

Un connecteur d'alimentation électrique 20 pouvant se connecter avec la prise électrique 1 est représenté sur les figures 2a et 2b. Le connecteur 20 comprend un corps 22 de forme sensiblement cylindrique et comporte un méplat 22' destiné à être aligné avec le méplat 6' de la prise 1 lorsque le connecteur 20 est engagé dans la prise 1.

Le connecteur 20 comprend également une partie fonctionnelle 24 complémentaire de la partie fonctionnelle 2 de la prise 1 et qui est, dans ce mode de réalisation, une prise « mâle » comportant des broches (non visibles) pouvant s'insérer dans les perforations 8 de la prise 1. La partie fonctionnelle 24 émerge du corps 20 et a une forme identique à ce corps mais est de dimension plus petite. Une partie annulaire 26 du corps 20, de préférence plane et s'étendant dans un plan perpendiculaire à un axe longitudinal 28 du corps 20, est laissée libre autour de la partie fonctionnelle 24. Lorsque le connecteur 20 est connecté à la prise 1 comme représenté sur la figure 2b, la partie fonctionnelle 24 s'insère dans la partie fonctionnelle 2 à l'intérieur du pourtour 6 et la partie annulaire 26 vient alors se placer contre le pourtour 6.

Le connecteur 20 comprend une première tige mobile 30a et une deuxième tige mobile 30b (partiellement visible) comportant respectivement une première partie cylindrique 32a et une deuxième partie cylindrique 32b (non visible). La première et la deuxième parties cylindriques 32a et 32b forment respectivement à leur extrémité une première surface d'aimantation mobile 34a et une deuxième surface d'aimantation mobile 34b (non visible). La première et la deuxième surfaces d'aimantation mobiles 34a et 34b sont destinées à réaliser un contact aimanté avec la première et la deuxième surface d'aimantation complémentaires 10a et 10b respectivement. Selon ce mode de réalisation, la première et la deuxième surfaces d'aimantation mobiles 34a et 34b comprennent chacune un aimant permanent qui peut réaliser un contact aimanté avec la première et la deuxième surfaces d'aimantation complémentaires 10a et 10b en fer doux.

La première tige mobile 30a traverse un premier boîtier 36a qui est fixé au corps 22 et qui comporte (ou qui est relié à) un premier système d'entrainement (non visible). Le premier système d'entrainement permet à la première tige mobile 30a d'être mobile par rapport au corps 20 par un mouvement de translation. La première surface d'aimantation mobile 34a est donc également mobile par rapport au corps 20 par un mouvement de translation. De la même façon, la deuxième tige mobile 30a et donc la deuxième surface d'aimantation mobile 34b sont mobiles par rapport au corps 20 par un mouvement de translation grâce à un deuxième système d'entrainement (non visible).

Le premier et le deuxième systèmes d'entrainement sont identiques et comportent un moteur pouvant fonctionner selon deux sens, un premier sens selon lequel la première et la deuxième tiges mobiles 30a et 30b se déplacent vers la prise 1 selon une direction D1, et un deuxième sens selon lequel la première et la deuxième tiges mobiles 30a et 30b se déplacent selon une direction D2 opposé à la direction D1. Le premier et le deuxième systèmes d'entrainement fonctionnent de préférence de façon synchronisée. Selon un mode de réalisation possible, un seul système d'entrainement peut permettre le déplacement de la première et de la deuxième tige mobile 30a et 30b simultanément.

Le connecteur 20 comprend une première tige poussoir 40a et une deuxième tige poussoir 40b aboutissant respectivement à une première surface poussoir 44a et à une deuxième surface poussoir 44b. La première et la deuxième surfaces poussoir 44a et 44b sont destinées à prendre appui sur la première et la deuxième surfaces d'appui 12a et 12b respectivement.

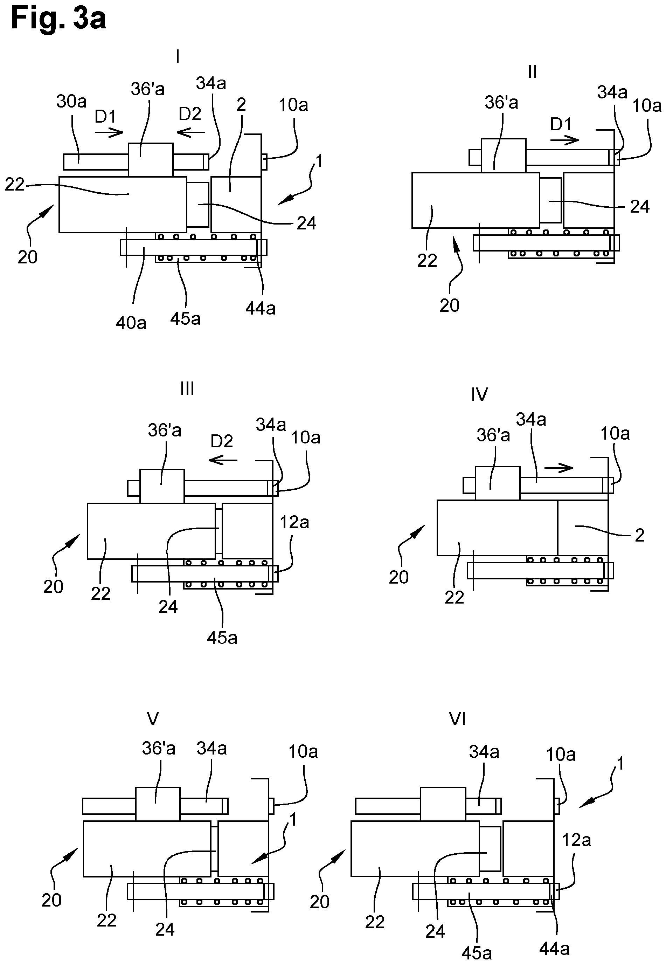

La première tige poussoir 40a traverse un premier élément de maintien 46a qui est fixé au corps 22. La première tige poussoir 40a comporte une partie formant un ressort 45a et qui forme un premier système de répulsion dont le mode de fonctionnement sera décrit en référence à la figure 3a. La première tige poussoir 40a est donc mobile par rapport au corps par compression ou allongement du ressort 45a. De la même façon, la deuxième tige poussoir 40b est fixée au corps 22 par un deuxième élément de maintien 46b et comporte une partie formant un ressort 45b et qui forme un deuxième système de répulsion.

Le premier et le deuxième systèmes de répulsion 45a et 45b sont comprimés lorsque le connecteur se connecte à la prise 1 et reviennent à leur longueur initiale en exerçant une pression sur la prise 1 lorsque le connecteur se déconnecte de cette dernière. Selon un autre mode de réalisation possible, le premier et le deuxième systèmes de répulsion 45a et 45b peuvent comporter un moteur permettant la translation des tiges poussoirs comme décrit pour les tiges mobiles 30a et 30b.

Le connecteur 20 peut être fixé à une extrémité d'un bras mobile 49 par le méplat 22'. Sur ce même méplat 22' peut être fixée une caméra 47 permettant de visualiser la prise 1. La caméra 47 est reliée à un dispositif de traitement (non visible) qui permet de guider le bras mobile 49 de façon à approcher ou au contraire à éloigner le connecteur 20 de la prise 1.

Un premier mode de réalisation du procédé de connexion du connecteur d'alimentation électrique 20 à la prise électrique 1 est représenté sur la figure 3a. Sur cette figure, seules la première tige mobile 30a et la première tige poussoir 40a du connecteur 20 sont représentées. De même, seules la première surface d'aimantation complémentaire 10a et la première surface d'appui 12a de la prise 1 sont représentées.

Dans une première étape I, le connecteur 20 est approché de la prise 1 par le bras mobile 49 de façon à placer la partie fonctionnelle 24 du connecteur 20 en face de la partie fonctionnelle 2 de la prise. La première surface poussoir 44a et la deuxième surface poussoir 44b (non représentée) se placent alors respectivement au contact de la première surface d'appui 12a et de la deuxième surface d'appui 12b (non représenté), les ressorts 45a et 45b étant dans un état de repos. Dans cette première étape, le bras mobile 49 ne fournit qu'un effort minime pour maintenir le connecteur 20 en position.

Dans une deuxième étape II, le premier système d'entrainement (ou moteur) 36'a fonctionne dans un premier sens de manière à ce que la première tige mobile 30a réalise un mouvement de translation dans la direction D1 et s'approche ainsi de la prise 1. Selon ce mouvement, la première surface d'aimantation mobile 34a s'approche de la première surface d'aimantation complémentaire 10a de la prise 1 et se met en contact avec cette surface 10a sous l'effet de l'attraction de l'aimant permanent de la première surface d'aimantation mobile 34a avec la première surface d'aimantation complémentaire 10a en fer doux. La force de l'attraction aimantée entre ces deux surfaces est par exemple comprise entre 100 et 300 newton (N). A la fin de cette deuxième étape, le connecteur 20 est pré-engagé dans la prise 1. Simultanément et selon le même mécanisme (non représenté), le deuxième système d'entrainement permet le contact aimanté entre la deuxième surface d'aimantation mobile 34b et la deuxième surface d'aimantation complémentaire 10b.

Dans une troisième étape III, le premier système d'entrainement 36'a ainsi que le deuxième système d'entrainement (non représenté) fonctionnent dans le deuxième sens. La force d'attraction entre les surfaces d'aimantation 34a et 10a d'une part, et 34b et 10b d'autre part, étant plus forte que la force exercée par le premier et le deuxième systèmes d'entrainement 36'a, ces derniers ne parviennent pas à éloigner les surfaces d'aimantation les unes des autres. C'est alors le corps 22 du connecteur 20 qui s'approche de la prise 1. Le ressort 45a et le ressort 45b (non représenté) sont alors comprimés et donc raccourcis et exercent une pression sur les première et deuxième surfaces d'appui 12a et 12b.

Dans une quatrième étape IV, la partie fonctionnelle 24 du connecteur 20 s'engage dans la partie fonctionnelle 2 de la prise 1 jusqu'à ce que la partie annulaire 26 du connecteur vienne en butée contre le pourtour 6 de la prise 1, comme représenté sur la figure 2b. Dans cette quatrième étape IV, une fois le connecteur 20 engagé dans la prise 1, le courant électrique passe et la batterie du véhicule comprenant la prise 1 est rechargée.

Pendant la deuxième étape II de pré-engagement du connecteur dans la prise 1 comme pendant les étapes III et IV d'engagement du connecteur 20 dans la prise 1, le bras mobile 49 n'a pas à fournir d'effort particulier et permet uniquement le maintien du connecteur 20 en position face à la prise 1. En effet, durant les étapes II, III et IV, les efforts sont fournis par le connecteur 20 et notamment par le premier et le deuxième système d'entrainement 36'a et 36'b.

Le contact aimanté des surfaces d'aimantation mobiles 34a et 34b du connecteur avec les surfaces d'aimantation complémentaires 10a et 10b de la prise 1 se fait au niveau de deux positions qui sont placées de façon diamétralement opposée autour de la prise 1. Ce positionnement permet d'obtenir un contact stable et permet également que le connecteur 20 soit placé selon l'axe de connexion en vue de son engagement dans la prise 1. En particulier, le connecteur est placé de façon à ce que son axe central longitudinal 28 soit sensiblement aligné avec l'axe central de la prise 1 (l'axe central de la prise étant un axe passant par le centre de la prise 1 et étant perpendiculaire au plan de la prise 1).

Dans une cinquième étape V, lorsque la batterie du véhicule est chargée ou lorsqu'un utilisateur souhaite interrompre la charge, le connecteur 20 est éloigné de la prise 1. Pour cela, le premier système d'entrainement 36'a fonctionne dans le deuxième sens. Comme le connecteur est en buté contre la prise 1, ce n'est pas le corps 22 qui se déplace par rapport à la première surface d'aimantation mobile 34a comme dans la troisième étape III, mais c'est la première surface d'aimantation mobile 34b qui se déplace par rapport au corps 22 dans la direction D2. La première surface d'aimantation mobile 34a se détache alors de la première surface d'aimantation complémentaire 10a de la prise 1. De même, la deuxième surface d'aimantation mobile 34b est entrainée par le deuxième système d'entrainement 36'b et s'éloigne de la deuxième surface d'aimantation complémentaire 10b. Une fois les surfaces d'aimantation éloignées de quelques millimètres, elles perdent leur pouvoir d'attraction.

Dans une sixième étape VI, une fois qu'il n'y a plus d'attraction entre les surfaces d'aimantation, les premier et deuxième ressorts 45a et 45b s'allongent spontanément pour revenir à leur état de repos. Les première et deuxième surfaces poussoirs 44a et 44b repoussent ainsi le connecteur 20 de la prise 1 en exerçant une poussée sur les première et deuxième surfaces d'appui 12a et 12b respectivement. A la fin de la sixième étape VI, le connecteur 20 est alors déconnecté ou désengagé de la prise 1.

Dans la sixième étape de déconnexion VI, comme dans la deuxième étape II de pré-engagement du connecteur dans la prise 1 et dans les étapes III et IV d'engagement du connecteur dans la prise, le bras mobile ne fourni par d'effort particulier et ne fait que maintenir le connecteur 20 en position face à la prise. C'est le connecteur 20, par l'intermédiaire des premier et deuxième systèmes de répulsion 45a et 45b qui fournit l'effort de façon à désengager le connecteur.

Avantageusement, la pression exercée par les surfaces poussoir 44a et 44b sur les surfaces d'appui 12 a et 12b se fait au niveau de deux positions qui sont placées de façon diamétralement opposées autour de la prise, ce qui permet de désengager le connecteur 20 de la prise 1 tout en laissant le connecteur dans l'axe de connexion. Le désengagement (ou la déconnexion) se fait alors sans risquer d'endommager la partie fonctionnelle 24 du connecteur et/ou la partie fonctionnelle 2 de la prise 1.

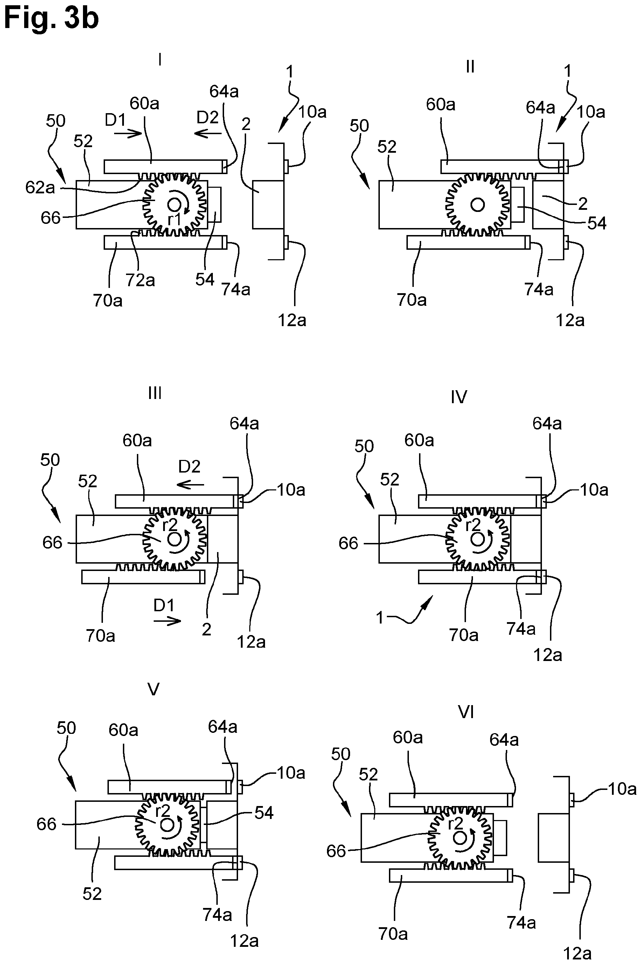

Selon un deuxième mode de réalisation possible représenté sur la figure 3b, la connexion se fait entre la prise 1 de la figure 1 et un connecteur 50 différent de celui décrit sur les figures 2a et 2b.

Le connecteur 50 comprend une première surface d'aimantation mobile 64a positionnée à l'extrémité d'une première tige mobile 60a et comprenant une première crémaillère 62a s'étendant sur une partie de sa longueur. Le connecteur 50 comprend également une deuxième tige mobile (non visible) identique à la première tige mobile et dont le fonctionnement est identique à celui qui va être décrit pour la première tige mobile 60a.

Le connecteur 50 comprend une première tige poussoir 70a comportant à son extrémité une première surface poussoir 74a et comportant également une deuxième crémaillère 72a s'étendant sur une partie de sa longueur. Le connecteur 50 comprend aussi une deuxième tige poussoir (non visible) identique à la première tige poussoir et dont fonctionnement est identique à celui qui va être décrit pour la première tige poussoir 70a.

La première et la deuxième crémaillères 62a et 72a sont entrainées par un pignon 66 mobile en rotation par rapport au corps 52 du connecteur 50. Les autres parties du connecteur 50 sont identiques au connecteur 20. Dans ce mode de réalisation, la première crémaillère 62a associée au pignon 66 constitue le premier système d'entrainement et la deuxième crémaillère 72a associée au pignon 66 constitue le premier système de répulsion.

Le procédé selon ce mode de réalisation comprend les étapes suivantes :
- une première étape I dans laquelle le pignon 66 effectue une rotation dans un premier sens de rotation R1 entrainant le déplacement de la première tige mobile 60a dans la direction D1 ; dans cette étape la première tige poussoir 70a se déplace selon la direction D2 ;
- une deuxième étape II qui est une étape de pré-engagement dans laquelle la première surface d'aimantation mobile 64a vient se mettre en contact aimanté avec la première surface d'aimantation complémentaire 10a ;
- une troisième étape III dans laquelle le pignon 66 tourne dans un deuxième sens R2 (inverse au premier sens R1) avec une force ne permettant pas de séparer les surfaces d'aimantation 64a et 10a ; c'est alors le connecteur 50 qui s'approche de la prise 1 et engage la partie fonctionnelle 24 dans la partie fonctionnelle 2 de la prise 1 ; dans cette étape, la première tige poussoir 70a se déplace dans la direction D1 ;
- une quatrième étape IV dans laquelle la rotation du pignon 66 continue jusqu'à ce que le connecteur 50 vienne en buté contre la prise 1 ; dans cette étape, la première surface poussoir 74a se met au contact de la première surface d'appui 12a ; la batterie du véhicule peut alors être chargée ;
- une cinquième étape V dans laquelle le pignon 66 continue de tourner dans le deuxième sens ; comme le connecteur 50 est en butée contre la prise 1, c'est la tige mobile 60a qui se déplace dans la direction D2 ce qui entraine l'éloignement des surfaces d'aimantation 64a et 10a ;
- une sixième étape VI dans laquelle le pignon 66 continue de tourner dans le deuxième sens ; la première tige poussoir 70a continue alors de se déplacer dans la direction D1 ce qui permet à la première surface poussoir 74a d'exercer une pression sur la première surface d'appui 12a de façon à désengager le connecteur 50 de la prise 1.

Comme pour le premier mode de réalisation du procédé, les différentes étapes sont réalisées sans que le bras mobile n'ait à fournir un effort.

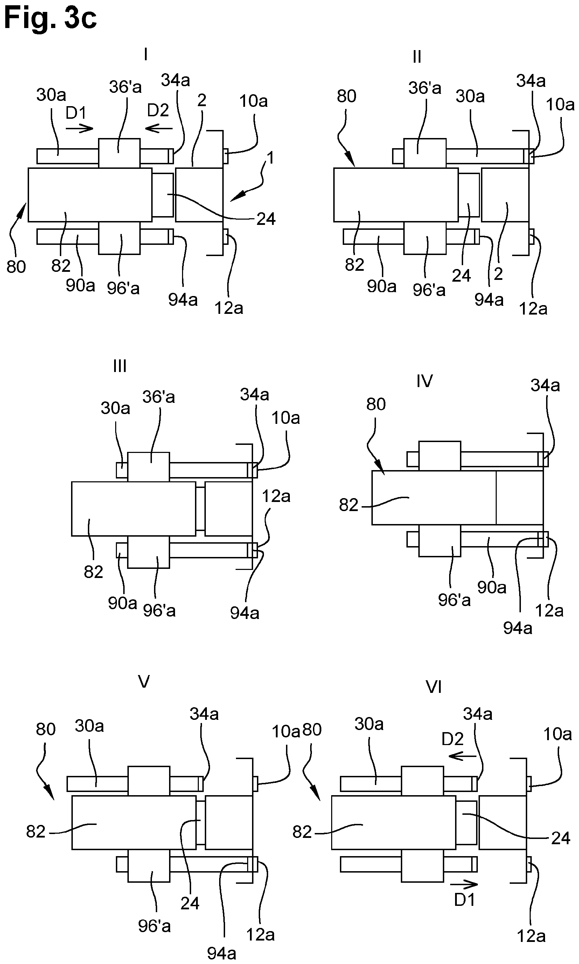

Selon un troisième mode de réalisation du procédé représenté sur la figure 3c, la connexion se fait entre la prise 1 de la figure 1 et un connecteur 80 différent du connecteur 20.

Le connecteur 80 diffère du connecteur 20 en ce qu'il comprend (à la place de la première tige poussoir 40a) une première tige poussoir 90a mobile par rapport au corps 82 au moyen d'un deuxième système de répulsion 96'a qui est un moteur. La première tige poussoir mobile 90a comprend à son extrémité une première surface poussoir 94a destinée à venir au contact de la première surface d'appui 12a. Le connecteur 80 comprend également une deuxième tige poussoir mobile 90b (non visible) identique à la première tige poussoir et qui fonctionne de la même façon.

Le procédé selon ce mode de réalisation comprend les étapes suivantes :
- une première étape I identique à la première étape I du premier mode de réalisation rapprochant la première surface d'aimantation mobile 34a de la première surface d'aimantation complémentaire 10a ; dans cette étape, la première tige poussoir 90a n'a pas été déplacée et est éloignée de la prise 1 ;
- une deuxième, une troisième et une quatrième étapes II, III et IV au cours desquelles le connecteur 80 est pré-engagé puis engagé dans la prise 1 et qui sont identiques aux première, deuxième et troisième étapes du premier mode de réalisation ; au cours de la première et de la deuxième étapes II et III la première tige poussoir 90a n'a pas été déplacée et est éloignée de la prise 1 ; une fois la quatrième étape IV réalisée, la première surface poussoir 94a est au contact de la première surface d'appui 12a ;
- une cinquième étape V dans laquelle le premier système d'entrainement 36'a fonctionne dans le deuxième sens et éloigne les surfaces d'aimantation les unes des autres comme dans le premier mode de réalisation ; le premier système de répulsion 96'a qui est un moteur permet alors le déplacement de la première tige poussoir 90a dans la direction D1 ; la première surface poussoir 94a exerce alors une pression sur la première surface d'appui 12a ce qui désengage le connecteur 80 de la prise 1. ;
- une sixième étape VI dans laquelle le premier système de répulsion 96'a continue de déplacer la première tige poussoir 90a ce qui permet de désengager complètement le connecteur 80 de la prise 1.

Comme pour le premier mode et le deuxième modes de réalisation du procédé, les différentes étapes sont réalisées sans que le bras mobile n'ait à fournir un effort.

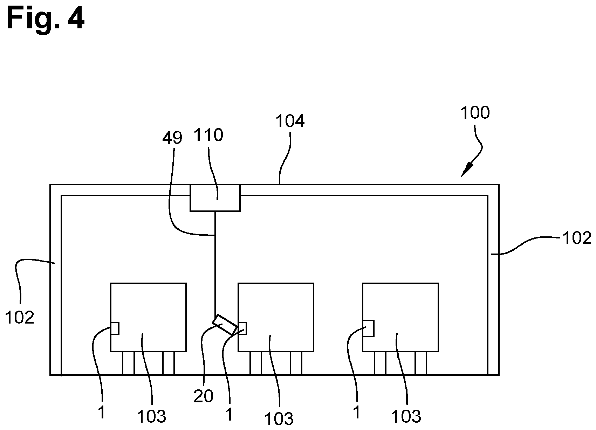

Comme illustré sur la figure 4, un portique 100 de recharge automatique de véhicules électriques ou hybrides comprend deux éléments longitudinaux de support 102 fixés ou posés au sol et reliés par une poutre transversale 104 parallèle au sol. Le portique 100 forme un espace intérieur dans lequel peuvent être garés plusieurs véhicules 103 électriques ou hybrides destinés à être rechargés. Les véhicules 103 sont équipés d'une prise électrique 1.

Une unité mobile 110 est fixée de façon mobile à la poutre transversale 104. Le bras 49 relie l'unité mobile 110 au connecteur 20 décrit précédemment qui va pouvoir recharger les véhicules 103 en se connectant successivement aux prises 1. L'unité mobile se déplace de façon à amener le connecteur 20 successivement vers les prises 1. Comme l'effort de connexion et de déconnexion avec les prises 1 est fourni par le connecteur 20, le bras mobile 49 n'a pas à fournir d'effort et n'a donc pas besoin d'être rigide. Le bras 49 ne sert qu'à maintenir le connecteur 20 et à le positionner en face des prises 1 auxquelles il doit se connecter.

## Revendications

1. Procédé de connexion d'un connecteur d'alimentation électrique (20, 50, 80) à une prise électrique (1) de véhicule (103) comprenant une batterie rechargeable électriquement, ledit connecteur d'alimentation (20, 50, 80) comprenant un corps (22, 52, 82) et au moins une première surface d'aimantation mobile (34a, 64a) par rapport audit corps (22, 52, 82), le procédé comprenant au moins les étapes de :
- mettre en contact aimanté ladite au moins une première surface d'aimantation mobile (34a, 64a) du connecteur (20, 50, 80) avec au moins une première surface d'aimantation complémentaire (10a) de la prise électrique (1), au moyen du déplacement de ladite au moins une surface d'aimantation mobile (34a, 64a) par rapport audit corps (22, 52, 82),
- engager le connecteur (20, 50, 80) dans la prise électrique (1) par déplacement du corps (22, 52, 82) par rapport à la première surface d'aimantation mobile (34a, 64a) de manière à effectuer un contact électrique entre le connecteur (20, 50, 80) et la prise électrique (1).

2. Procédé de connexion selon la revendication 1,
**caractérisé en ce qu'**il comprend en outre une phase de déconnexion entre le connecteur d'alimentation (20, 50, 80) et la prise électrique (1) une fois la batterie rechargée, ladite phase de déconnexion comprenant les étapes suivantes :
- éloigner la première surface d'aimantation mobile (34a, 64a) de la première surface d'aimantation complémentaire (10a) de façon à supprimer l'attraction aimantée entre ces deux surfaces, et
- exercer une pression sur une première surface d'appui (12 a)de la prise électrique (1) au moyen d'une première surface poussoir (44a, 74a, 94a) du connecteur (20, 50, 80) de manière à séparer le connecteur (20, 50, 80) et la prise électrique (1).

3. Connecteur d'alimentation électrique (20, 50, 80) destiné à être connecté à une prise électrique (1) de véhicule (103) , **caractérisé en ce qu'**il comprend :
- au moins un corps (22, 52, 82),
- au moins une première surface d'aimantation mobile (34a, 64a) par rapport audit corps destinée à réaliser un contact aimanté avec une première surface d'aimantation complémentaire (10a) de la prise électrique (1), et
- au moins une première surface poussoir mobile (44a, 74a, 94a) par rapport audit corps (22, 52, 82) destinée à s'appuyer sur une première surface d'appui de la prise électrique (12a).

4. Connecteur d'alimentation selon la revendication 3, **caractérisé en ce que** la première surface d'aimantation mobile (34a, 64a) est placée à l'extrémité d'un premier élément mobile (30a, 60a).

5. Connecteur d'alimentation selon la revendication 3 ou 4, **caractérisé en ce que** le premier élément mobile (30a, 60a) est mis en mouvement au moyen d'un premier système d'entraînement (36'a , 66).

6. Connecteur d'alimentation selon l'une quelconque des revendications 3 à 5, **caractérisé en ce que** la première surface poussoir (44a, 74a, 94a) est placée à l'extrémité d'un premier élément poussoir mobile (40a, 70a, 90a).
- au moins une première surface poussoir mobile (44a, 74a, 94a) par rapport audit corps (22, 52, 82) destinée à s'appuyer sur une première surface d'appui de la prise électrique (12a).

7. Système comprenant le connecteur d'alimentation électrique (20,50,80) selon l'une quelconque des revendications 3 à 6, et un véhicule comprenant une batterie rechargeable électriquement, **caractérisé en ce que** le véhicule (103) possède une prise électrique (1) permettant de recharger ladite batterie lorsqu'elle est connectée au connecteur d'alimentation électrique (20, 50, 80), ledit connecteur d'alimentation (20, 50, 80) comprenant un corps (22, 52, 82) et au moins une première surface d'aimantation mobile (34a, 64a) par rapport audit corps (22, 52, 82) selon un procédé comprenant au moins les étapes de :- mettre en contact aimanté ladite au moins une première surface d'aimantation mobile (34a, 64a) du connecteur (20, 50, 80) avec au moins une première surface d'aimantation complémentaire (10a) de la prise électrique (1), au moyen du déplacement de ladite au moins une surface d'aimantation mobile (34a, 64a) par rapport audit corps (22, 52, 82),- engager le connecteur (20, 50, 80) dans la prise électrique (1) par déplacement du corps (22, 52, 82) par rapport à la première surface d'aimantation mobile (34a, 64a) de manière à effectuer un contact électrique entre le connecteur (20, 50, 80) et la prise électrique (1), ladite au moins première surface d'aimantation complémentaire (10a) étant configurée pour interagir avec la surface d'aimantation mobile (34a, 64a) du connecteur électrique (20, 50, 80) et au moins une première surface d'appui (12a) configurée pour interagir avec une première surface poussoir (44a, 74a, 94a) du connecteur électrique (20, 50, 80).

8. Système selon la revendication 7, **caractérisé en ce que** la première surface d'aimantation complémentaire (10a) et la première surface d'appui (12a) sont disposées sur un bord annulaire externe (4) de la prise électrique (1).

9. Système selon la revendication 7 ou 8, **caractérisé en ce que** la prise électrique (1) comprend une deuxième surface d'aimantation complémentaire (10b) positionnée sur le bord annulaire externe (4) de manière diamétralement opposée à la première surface d'aimantation complémentaire (10a), et une deuxième surface d'appui (12b) positionnée sur le bord annulaire externe (4) de manière diamétralement opposée à la première surface d'appui (12a).

10. Installation (100) pour la recharge de batteries électriques d'au moins deux véhicules (103) **caractérisé en ce qu'**elle comprend un bras mobile (49) se terminant par un connecteur d'alimentation (20, 50, 80) selon l'une quelconque des revendications 3 à 6, ledit bras mobile (49) étant configuré pour se déplacer de manière à connecter le connecteur (20, 50, 80) successivement avec les prises électriques (1) desdits véhicules (103) pour recharger les batteries desdits véhicules (103), la connexion étant réalisé selon le procédé de la revendication 1 ou 2.

## Patentansprüche

1. Verfahren zum Verbinden eines elektrischen Versorgungssteckverbinders (20, 50, 80) mit einer Steckdose (1) eines Fahrzeugs (103), das eine elektrisch wiederaufladbare Batterie beinhaltet, wobei der Versorgungssteckverbinder (20, 50, 80) einen Körper (22, 52, 82) und mindestens eine erste Magnetisierungsoberfläche (34a, 64a), die mit Bezug auf den Körper (22, 52, 82) beweglich ist, beinhaltet, wobei das Verfahren mindestens die folgenden Schritte beinhaltet:
- Bringen der mindestens einen ersten beweglichen Magnetisierungsoberfläche (34a, 64a) des Steckverbinders (20, 50, 80) in magnetischen Kontakt mit mindestens einer ersten komplementären Magnetisierungsoberfläche (10a) der Steckdose (1) mittels Verschiebung der mindestens einen beweglichen Magnetisierungsoberfläche (34a, 64a) mit Bezug auf den Körper (22, 52, 82),
- Bringen des Steckverbinders (20, 50, 80) in Eingriff mit der Steckdose (1) mittels Verschiebung des Körpers (22, 52, 82) mit Bezug auf die erste bewegliche Magnetisierungsoberfläche (34a, 64a), um einen elektrischen Kontakt zwischen dem Steckverbinder (20, 50, 80) und der Steckdose (1) zu bewirken.

2. Verbindungsverfahren nach Anspruch 1, **dadurch gekennzeichnet, dass** es ferner eine Phase des Trennens des Versorgungssteckverbinders (20, 50, 80) von der Steckdose (1) beinhaltet, wenn die Batterie wiederaufgeladen ist, wobei die Trennphase die folgenden Schritte beinhaltet:
- Entfernen der ersten beweglichen Magnetisierungsoberfläche (34a, 64a) von der ersten komplementären Magnetisierungsoberfläche (10a), um die magnetische Anziehungskraft zwischen diesen zwei Oberflächen zu beseitigen, und
- Ausüben eines Drucks auf eine erste Anlageoberfläche (12a) der Steckdose (1) mittels einer ersten Druckoberfläche (44a, 74a, 94a) des Steckverbinders (20, 50, 80), um den Steckverbinder (20, 50, 80) von der Steckdose (1) zu trennen.

3. Elektrischer Versorgungssteckverbinder (20, 50, 80), der dazu bestimmt ist, mit einer Steckdose (1) eines Fahrzeugs (103) verbunden zu werden, **dadurch gekennzeichnet, dass** er Folgendes beinhaltet:
- mindestens einen Körper (22, 52, 82),
- mindestens eine erste Magnetisierungsoberfläche (34a, 64a), die mit Bezug auf den Körper beweglich ist und dazu bestimmt ist, einen magnetischen Kontakt mit einer ersten komplementären Magnetisierungsoberfläche (10a) der Steckdose (1) herzustellen, und
- mindestens eine erste Druckoberfläche (44a, 74a, 94a), die mit Bezug auf den Körper (22, 52, 82) beweglich ist und dazu bestimmt ist, auf eine erste Anlageoberfläche der Steckdose (12a) gedrückt zu werden.

4. Versorgungssteckverbinder nach Anspruch 3, **dadurch gekennzeichnet, dass** die erste bewegliche Magnetisierungsoberfläche (34a, 64a) am Ende eines ersten beweglichen Elements (30a, 60a) platziert ist.

5. Versorgungssteckverbinder nach Anspruch 3 oder 4, **dadurch gekennzeichnet, dass** das erste bewegliche Element (30a, 60a) mittels eines ersten Antriebssystems (36'a, 66) in Bewegung versetzt wird.

6. Versorgungssteckverbinder nach einem beliebigen der Ansprüche 3 bis 5, **dadurch gekennzeichnet, dass** die erste Druckoberfläche (44a, 74a, 94a) am Ende eines ersten beweglichen Druckelements (40a, 70a, 90a) platziert ist.
- mindestens eine erste Druckoberfläche (44a, 74a, 94a), die mit Bezug auf den Körper (22, 52, 82) beweglich ist und dazu bestimmt ist, auf eine erste Anlageoberfläche der Steckdose (12a) gedrückt zu werden.

7. System, beinhaltend den elektrischen Versorgungssteckverbinder (20, 50, 80) nach einem beliebigen der Ansprüche 3 bis 6 und ein Fahrzeug, das eine elektrisch wiederaufladbare Batterie beinhaltet, **dadurch gekennzeichnet, dass** das Fahrzeug (103) eine Steckdose (1) besitzt, die es gestattet, die Batterie wiederaufzuladen, wenn sie mit dem elektrischen Versorgungssteckverbinder (20, 50, 80) verbunden ist, wobei der Versorgungssteckverbinder (20, 50, 80) einen Körper (22, 52, 82) und mindestens eine erste Magnetisierungsoberfläche (34a, 64a) beinhaltet, die mit Bezug auf den Körper (22, 52, 82) gemäß einem Verfahren beweglich ist, das mindestens die folgenden Schritte beinhaltet: - Bringen der mindestens einen ersten beweglichen Magnetisierungsoberfläche (34a, 64a) des Steckverbinders (20, 50, 80) in magnetischen Kontakt mit mindestens einer ersten komplementären Magnetisierungsoberfläche (10a) der Steckdose (1) mittels Verschiebung der mindestens einen beweglichen Magnetisierungsoberfläche (34a, 64a) mit Bezug auf den Körper (22, 52, 82), - Bringen des Steckverbinders (20, 50, 80) in Eingriff mit der Steckdose (1) mittels Verschiebung des Körpers (22, 52, 82) mit Bezug auf die erste bewegliche Magnetisierungsoberfläche (34a, 64a), um einen elektrischen Kontakt zwischen dem Steckverbinder (20, 50, 80) und der Steckdose (1) zu bewirken, wobei die mindestens erste komplementäre Magnetisierungsoberfläche (10a) dazu konfiguriert ist, mit der beweglichen Magnetisierungsoberfläche (34a, 64a) des elektrischen Steckverbinders (20, 50, 80) zusammenzuwirken, und mindestens eine erste Anlageoberfläche (12a) dazu konfiguriert ist, mit einer ersten Druckoberfläche (44a, 74a, 94a) des elektrischen Steckverbinders (20, 50, 80) zusammenzuwirken.

8. System nach Anspruch 7, **dadurch gekennzeichnet, dass** die erste komplementäre Magnetisierungsoberfläche (10a) und die erste Anlageoberfläche (12a) auf einem ringförmigen Außenrand (4) der Steckdose (1) angeordnet sind.

9. System nach Anspruch 7 oder 8, **dadurch gekennzeichnet, dass** die Steckdose (1) eine zweite komplementäre Magnetisierungsoberfläche (10b), die auf dem ringförmigen Außenrand (4) zu der ersten komplementären Magnetisierungsoberfläche (10a) diametral gegenüberliegend positioniert ist, und eine zweite Anlageoberfläche (12b), die auf dem ringförmigen Außenrand (4) zu der ersten Anlageoberfläche (12a) diametral gegenüberliegend positioniert ist, beinhaltet.

10. Anlage (100) zum Wiederaufladen von elektrischen Batterien von mindestens zwei Fahrzeugen (103), **dadurch gekennzeichnet, dass** sie einen beweglichen Arm (49) beinhaltet, der mit einem Versorgungssteckverbinder (20, 50, 80) nach einem beliebigen der Ansprüche 3 bis 6 endet, wobei der bewegliche Arm (49) dazu konfiguriert ist, sich so zu bewegen, dass er den Steckverbinder (20, 50, 80) nacheinander mit den Steckdosen (1) der Fahrzeuge (103) verbindet, um die Batterien der Fahrzeuge (103) wiederaufzuladen, wobei die Verbindung gemäß dem Verfahren nach Anspruch 1 oder 2 erfolgt.

## Claims

1. Method for connecting an electrical power supply connector (20, 50, 80) to an electrical outlet (1) of a vehicle (103) comprising an electrically rechargeable battery, said power supply connector (20, 50, 80) comprising a body (22, 52, 82) and at least one first mobile magnetization surface (34a, 64a) that is able to move relative to said body (22, 52, 82), the method comprising at least the steps of:
- bringing said at least one first mobile magnetization surface (34a, 64a) of the connector (20, 50, 80) into magnetic contact with at least one first complementary magnetization surface (10a) of the electrical outlet (1), by moving said at least one mobile magnetization surface (34a, 64a) relative to said body (22, 52, 82),
- engaging the connector (20, 50, 80) in the electrical outlet (1) by moving the body (22, 52, 82) relative to the first mobile magnetization surface (34a, 64a) in such a way as to make electrical contact between the connector (20, 50, 80) and the electrical outlet (1).

2. Connection method according to Claim 1, **characterized in that** it further comprises a phase of disconnection between the power supply connector (20, 50, 80) and the electrical outlet (1) once the battery has been recharged, said disconnection phase comprising the following steps:
- moving the first mobile magnetization surface (34a, 64a) away from the first complementary magnetization surface (10a) in such a way as to eliminate the magnetic attraction between these two surfaces, and
- exerting pressure on a first bearing surface (12a) of the electrical outlet (1) by means of a first push surface (44a, 74a, 94a) of the connector (20, 50, 80) in such a way as to separate the connector (20, 50, 80) and the electrical outlet (1).

3. Electrical power supply connector (20, 50, 80) intended to be connected to an electrical outlet (1) of a vehicle (103), **characterized in that** it comprises:
- at least one body (22, 52, 82),
- at least one first mobile magnetization surface (34a, 64a) that is able to move relative to said body, intended to make magnetic contact with a first complementary magnetization surface (10a) of the electrical outlet (1), and
- at least one first mobile push surface (44a, 74a, 94a) that is able to move relative to said body (22, 52, 82), intended to bear on a first bearing surface of the electrical outlet (12a).

4. Power supply connector according to Claim 3, **characterized in that** the first mobile magnetization surface (34a, 64a) is placed at the end of a first mobile element (30a, 60a).

5. Power supply connector according to Claim 3 or 4, **characterized in that** the first mobile element (30a, 60a) is set in motion by means of a first drive system (36'a, 66) .

6. Power supply connector according to any one of Claims 3 to 5, **characterized in that** the first push surface (44a, 74a, 94a) is placed at the end of a first mobile push element (40a, 70a, 90a).
- at least one first mobile push surface (44a, 74a, 94a) that is able to move relative to said body (22, 52, 82), intended to bear on a first bearing surface of the electrical outlet (12a).

7. System comprising the electrical power supply connector (20, 50, 80) according to any one of Claims 3 to 6, and a vehicle comprising an electrically rechargeable battery, **characterized in that** the vehicle (103) has an electrical outlet (1) for recharging said battery when it is connected to the electrical power supply connector (20, 50, 80), said power supply connector (20, 50, 80) comprising a body (22, 52, 82) and at least one first mobile magnetization surface (34a, 64a) that is able to move relative to said body (22, 52, 82) according to a method comprising at least the steps of: - bringing said at least one first mobile magnetization surface (34a, 64a) of the connector (20, 50, 80) into magnetic contact with at least one first complementary magnetization surface (10a) of the electrical outlet (1), by moving said at least one mobile magnetization surface (34a, 64a) relative to said body (22, 52, 82), - engaging the connector (20, 50, 80) in the electrical outlet (1) by moving the body (22, 52, 82) relative to the first mobile magnetization surface (34a, 64a) in such a way as to make electrical contact between the connector (20, 50, 80) and the electrical outlet (1), said at least first complementary magnetization surface (10a) being configured to interact with the mobile magnetization surface (34a, 64a) of the electrical connector (20, 50, 80) and at least one first bearing surface (12a) configured to interact with a first push surface (44a, 74a, 94a) of the electrical connector (20, 50, 80).

8. System according to Claim 7, **characterized in that** the first complementary magnetization surface (10a) and the first bearing surface (12a) are arranged on an outer annular edge (4) of the electrical outlet (1).

9. System according to Claim 7 or 8, **characterized in that** the electrical outlet (1) comprises a second complementary magnetization surface (10b) positioned on the outer annular edge (4) diametrically opposite the first complementary magnetization surface (10a), and a second bearing surface (12b) positioned on the outer annular edge (4) diametrically opposite the first bearing surface (12a).

10. Installation (100) for recharging electric batteries of at least two vehicles (103), **characterized in that** it comprises a mobile arm (49) ending in a power supply connector (20, 50, 80) according to any one of Claims 3 to 6, said mobile arm (49) being configured to move in such a way as to connect the connector (20, 50, 80) successively with the electrical outlets (1) of said vehicles (103) to recharge the batteries of said vehicles (103), the connection being made according to the method of Claim 1 or 2.
